# EUROPEAN PATENT SPECIFICATION

(11) **EP 3 797 580 B1**
(45) Date of publication and mention of the grant of the patent: **27.05.2026**
(21) Application number: 20198396.2
(22) Date of filing: 25.09.2020
(51) Int. Cl.: A01F 25/13, A01F 25/16

(54) **CUT SURFACE SEALING DEVICE AND METHOD FOR CUT SURFACE SEALING**
SCHNITTFLÄCHENVERSIEGELUNGSVORRICHTUNG UND VERFAHREN ZUM VERSIEGELN VON SCHNITTFLÄCHEN
DISPOSITIF ET PROCÉDÉ D'ÉTANCHÉITÉ DE SURFACE DE COUPE

(30) Priority: 25.09.2019 NL 2023904
(43) Date of publication of application: 31.03.2021
(73) Proprietor: Jan Sake Bosch Holding B.V., 9008 SV Reduzum (NL)
(72) Inventor: BOSCH, Jan Sake, 9008 SV Reduzum (NL)
(74) Representative: Arnold & Siedsma

(56) References cited:
- EP-A1- 1 889 535
- EP-A1- 3 476 204
- DE-A1- 102008 061 767
- DE-U1- 202017 101 355

## Description

The invention relates to a cut surface sealing device and method for cut surface sealing.

In practice the use of bulk fodder storage in the form of bulk fodder heaps covered with a covering sheet and/or trench silos provided with side walls and covered with a covering sheet is known. In use, bulk fodder is cut off by the user from one side, the so-called cut or the cut surface.

In order to prevent spoiling the cut surface is preferably also shielded from weather influences with a seal, such as plastic tarpaulin or a (reusable) sheet. It is the case here that the seal is formed by the outer end of the covering sheet, this sometimes also taking the form of a plastic tarpaulin. This means that the process of cutting comprises of at least partially removing the seal, cutting off and removing the bulk fodder, and then replacing the rolled-up or removed seal again.

A drawback of the known cover or devices therefor is thereby that the cutting is very time-consuming. This is caused mostly by the fact that partially removing and replacing the seal takes a lot of time.

In order to obviate this drawback systems are known which are provided with a cover on a roller, which can be rolled up and unrolled. The system comprises for this purpose supports which are placed on or directly adjacently of the side wall and which are connected to a span. This span is provided with a roller on which the covering sheet is arranged. The device is here rolled forward to such an extent that the covering sheet rests on the bottom.

EP 1 889 535 relates to a system for bringing a reusable cover over, either removing it from silage, in which use is made of an U-shaped silo in which silage is stored. The system comprises a carriage with wheels and means for rotatably supporting a driven spool on which a cover can be present.

EP 3 476 204 discloses an assembly for selectively covering and/or uncovering a silage with a reusable cover sheet. The assembly comprises a frame that has two supports that are positioned outside a silage wall and two reel positions that extend over the silage walls, such that the frame spans the silage.

A drawback of these known devices for covering the cut surface is that they form a span with a seal which is arranged therein or thereon and which has supports which are placed directly adjacently of the bulk fodder and/or on the silo walls. This means that each silo thereby requires its own cover, which increases costs. The invention has for its object to solve this drawback.

This object is achieved with a cut surface sealing device for sealing a cut surface of a bulk fodder storage such as a trench silo, the device comprising:
- a frame extending over a width, the frame comprising:
   ~ a number of support elements extending substantially in vertical direction and configured to support the device on a ground surface or side walls of a trench silo, and
   ~ a spanning element extending between the number of support elements, such that the support elements and the spanning element form a cut surface opening;
- a seal which is operatively connected to the frame and is arranged in the cut surface opening, wherein the seal is movable between a closed position, in which the seal substantially closes the cut surface opening, and an open position in which the cut surface opening is at least partially accessible,
wherein the width of the frame is adjustable, such that the width of the frame can be adapted to the width of the bulk fodder storage.

An advantage of the cut surface sealing device according to the invention is that the width can be adapted to the width of a silo or bulk fodder storage. This makes it possible to use one single device for a plurality of silos of different dimensions. For instance envisaged here is the successive use of the device in a first silo with a first width and, after emptying of the first silo, displacing and using the device in a second silo with a second width, which differs from the first width. For this purpose it is only necessary for the width of the device according to the invention to be adapted to the second width, and it is prevented that two separate devices are necessary.

A further advantage of the cut surface sealing device according to the invention is that, also owing to the adjustability of the width, the cut surface sealing device can be mass-produced and can be applied for diverse silo widths. This is not possible in the existing cut surface sealing devices which are made to size.

Yet another advantage of the cut surface sealing device according to the invention is that the cut surface sealing device need not be displaced in order to make the cut surface accessible for cutting. This results in a (considerable) time saving in the process of cutting of the bulk fodder.

This effect is achieved in that the seal is arranged and is displaced substantially in a vertical plane which runs substantially parallel to the cut surface. This can for instance be done by folding, rolling up or lifting the seal (in this plane in question). This prevents the device having to be displaced as a whole, as for instance the case in the known devices which support on or adjacently of the wall. In such devices it is the case that the whole device must be displaced over or along the wall in order to roll the sheet over a considerable length and make the cut surface accessible. This displacement and the associated rolling up are however time-consuming and thereby expensive.

In an embodiment of the cut surface sealing device according to the invention the spanning element can be provided with a coupling for coupling the device to a vehicle in order to be able to displace the device.

An advantage of the coupling devices that the cut surface sealing device can be coupled in simple manner to for instance a tractor in order to move the cut surface sealing device between different bulk fodder locations and/or silos. This further increases the flexibility and utility of the cut surface sealing device.

In an embodiment of the cut surface sealing device according to the invention the spanning element can be telescopic and/or the number of support elements can be telescopically connected to the spanning element, so that the width of the frame can thereby preferably be made adjustable.

An advantage of this embodiment according to the invention is that the width of the frame, and thereby the device as a whole, can be adjusted substantially in step-free manner, i.e. continuously. It is hereby achieved that the device can be adjusted to almost any width between the maximum and minimum width.

A further advantage of this embodiment of the device according to the invention is that a telescopic element is easy to operate.

Yet another advantage is that the width adjustment of the device can be performed in motorized manner by providing the device with a width-adjusting drive.

In an embodiment according to the invention the spanning element is formed as a box profile or tube profile with a spanning element diameter (first diameter) and the support elements are provided with a projection or end part which is formed as a box profile or tube profile with a support element diameter (second diameter) which fits over or can be introduced into the diameter of the spanning element and in this way realize the telescopic frame. Making the box or tube profiles slidable in each other realizes the (continuous) width adjustment of the frame.

In an embodiment of the cut surface sealing device according to the invention the spanning element can comprise two or more parts which can be coupled and collectively form the spanning element.

An advantage of this construction is that the width of the frame can be adjusted by selecting a correct size for the coupling parts used. In other words, the coupling parts are available in different sizes, wherein it is determined by means of the width of the frame which coupling parts are applied in order to realize the desired width. By adding or replacing a coupling part on a frame, the frame can be easily adapted to a different width of silo.

In an embodiment of the cut surface sealing device according to the invention the number of support elements can be height-adjustable.

An advantage of height-adjustable support elements is that, in addition to the width of the frame, the height of the device can also be adjusted in order to realize an (even) greater flexibility in the utility of the cut surface sealing device. A farmer can hereby opt, if necessary, to raise the existing frame if the ensilaged or stacked quantity of bulk fodder is greater and thereby results in a higher heap.

In an embodiment the number of support elements comprises telescopic support elements, such that the height of the support elements is adjustable.

An advantage of telescopic support elements is that they can be adjusted in step-free manner, i.e. continuously, whereby any desired height can be achieved.

A further advantage is that the telescopic elements can be adjusted in the height in simple manner, wherein this height adjustment can also be motorized or even automated.

In an embodiment the number of support elements comprises one or more coupling parts of a predetermined height, wherein the coupling parts are coupled in order to adjust and make adjustable the height of the support elements.

The application of coupling parts for adjusting the height has the advantage that the height adjustment can be realized in simple manner. Only the upper side of the device need be lifted in use, after which coupling parts can be arranged.

A further advantage is that the coupling parts form a robust and operationally reliable connection which will not be affected much by weather conditions.

In an embodiment of the cut surface sealing device according to the invention the spanning element can be a divisible element comprising two parts of equal width which can be connected to each other.

An advantage of this embodiment is that the divisible spanning element makes transport from the production location of the device to the customer easier. The divisibility substantially halves the width of the span, whereby the parts can be easily transported by vehicle or vessel. The divisible element is preferably divided into two equal parts, such as for instance two parts of 3 metres, since this can be transported by truck.

In an embodiment of the cut surface sealing device according to the invention the seal can be automatically movable between the closed and the open position.

An advantage of this embodiment is that opening and closing of the seal can be done remotely, such as for instance by means of a remote control.

A further advantage is that the automatic opening and closing can also be used, for instance by coupling to a measuring system, to control the conditions behind the seal, i.e. close to the cut surface. It is for instance possible here to envisage the seal opening at an (excessively) high preset temperature and/or automatically closing when rain is detected.

An example of this embodiment is that the frame, and preferably the support elements, are provided with an electrical drive or an (optionally electric) motor. The drive or motor is connected to cables, chains and/or ropes, to which the seal or sealing parts are connected. In use of the cut surface sealing device the drive or motor can be used to drive the cables, chains and/or ropes and in this way slide the seal or sealing parts open and or closed.

In an embodiment of the cut surface sealing device according to the invention the number of support elements can be provided on or close to an underside thereof with wheels, wherein the wheels are preferably adjustable between a travelling position, in which the wheels support on the ground surface or the silo walls, and a stationary position in which the wheels do not support on the ground surface or the silo walls.

By providing the cut surface sealing device with wheels it can be displaced in simple manner when the cut surface moves in the silo.

A further advantage of arranging wheels on the support elements is that, especially in the case that the cut surface sealing device is not placed on silo walls but over the silo and/or the bulk fodder storage, so preferably on the ground, (and is positioned on either side thereof), the cut surface sealing device is more easily displaceable to a nearby other silo or bulk fodder storage so as to be utilized there.

In an embodiment of the cut surface sealing device according to the invention the number of support elements can be provided on an underside with sliding and/or wearing blocks, on which the device is slidable over a ground surface (and/or a silo wall). The number of support elements is then preferably further provided with wheels which are arranged on a side of the support element, close to the underside (and thereby the sliding and/or wearing blocks) thereof. This achieves that the device can as it were be 'clamped' onto silo walls. This increases the operational reliability of the device.

In an embodiment of the cut surface sealing device according to the invention the seal can be movable in vertical direction and substantially parallel to the height direction.

An advantage of a seal which is movable in vertical direction, such as for instance a seal which can be rolled up, is that the cut surface opening is left clear substantially wholly for access when it is brought into the opened state. This is realized in that the seal is brought into rolled-up form on an upper side of the frame close to the spanning element, whereby the cut surface opening is left substantially clear.

In an embodiment the seal can also be arranged for movement in vertical direction by giving it a pull-up form. A seal is hereby realized which essentially takes the form of a pleated seal.

In an embodiment of the cut surface sealing device according to the invention the seal can be slidable in horizontal direction and substantially parallel to the width direction.

An advantage of a seal arranged for sliding in horizontal direction is that it can be opened and closed in simple manner by means of manual operation, whereby the costs for the cut surface sealing device can be relatively low.

A further advantage is that the seal can be opened and closed relatively quickly by arranging the seal for sliding in a horizontal direction.

Yet another advantage is that the seal can also be opened partially in order to leave clear for use only a part of the cut surface along the whole height. It can hereby be prevented that the whole cut surface is exposed to the weather influences during the cutting and removal of bulk fodder from the storage or silo.

The cut surface sealing device according to the invention the frame is provided with a guide for guiding the seal between the open and closed position.

An advantage of a separate guide on the frame of the device is that the guide can be installed at a predetermined desired height. In a further embodiment the guide can also be arranged on the frame for movement in the height.

In an embodiment according to the invention the guide for guiding the seal is one of a guide rail, and preferably a telescopic guide rail, wherein the seal is receivable and slidable in the guide rail, a divisible guide rail comprising diverse rail parts which can be coupled, wherein the seal is receivable and slidable in the guide rail, or a wire which is connected on one side to the frame and is connected on another side, lying opposite as seen in the width direction, to a tensioning device for tensioning and slackening the wire, wherein the wire preferably comprises a metal wire and more preferably a steel wire, and wherein the seal is provided with rings which are slidable over the wire, or a tubular guide, preferably of metal, and wherein the curtain is preferably provided with rings which are slidable over the tubular form.

The guide can be embodied in diverse ways, wherein the specific embodiment depends on the installation costs, the need to automate and/or motorize the opening and closing and/or the shape and composition of the seal which is applied.

In an embodiment of the cut surface sealing device according to the invention the seal can be a tarpaulin or sheet, and preferably a reusable tarpaulin or sheet.

An advantage of using a tarpaulin or sheet as seal is that a tarpaulin or sheet can be rolled up or slid in relatively simple manner and undergoes little wear from regular reciprocal movement between the closed and the open position.

A further advantage of using a tarpaulin or sheet as seal is that a tarpaulin or sheet can be made to size in simple manner for a determined width and/or height of a silo. Because it can be rolled up and folded, a tarpaulin or sheet can also be provided with one fixed size which can be utilized for a large number of widths and/or heights of silo or bulk fodder storage.

In an embodiment according to the invention the tarpaulin or sheet is provided with a substantially closed structure or the tarpaulin or sheet is provided in the form of a mesh.

An advantage of a closed tarpaulin is that it is substantially liquid-tight and thereby prevents the bulk fodder from being exposed to and/or penetrated by rainwater at the cut surface. An advantage of the use of a mesh-like sheet or tarpaulin is that the openings in the mesh are air-permeable, whereby the temperature is substantially the same in front of and behind the mesh (i.e. close to the cut surface), and heating is prevented. If sufficiently small mesh openings are selected, passage of rainwater can also be substantially prevented.

In an embodiment of the cut surface sealing device according to the invention the seal can be provided with a number of sensors, wherein the sensors are preferably configured to measure one or more of temperature, humidity, airflow detection and/or wind force and/or proximity of vehicles and/or persons.

An advantage of applying a number of sensors is that the quality of the bulk fodder in the cut surface sealing device can be monitored and/or guarded better. It is possible here to envisage various different aspects, including monitoring the air humidity and temperature in and directly adjacently of the seal on the side of the cut surface in order to for instance determine whether heating is occurring.

A further advantage of using sensors, including for instance a humidity sensor and/or a wind force sensor, is that the seal can be closed automatically in the event of wind and/or rain in excess of a determined threshold value.

In addition, yet a further advantage is that sensors can also be applied which are able to check the quality of the cut. Just as the other sensor data, these data can be sent to a central storage and/or a local device in order to be processed, monitored and/or stored for later use.

In an embodiment of the cut surface sealing device according to the invention the number of sensors can comprise at least one proximity sensor, wherein the device can further be provided with a drive for automatically opening and/or closing the seal, and a control system, comprising a processor, which is configured to control the drive on the basis of measurement data of the at least one proximity sensor in order to open and/or close the seal on the basis of the proximity of persons and/or vehicles.

By using a proximity sensor in combination with a drive for the opening and closing a fully automatic seal can be realized in that the seal is opened automatically when a vehicle approaches to cut and/or collect bulk fodder from the storage or silo. The timeline of fodder transport is hereby shortened and a more efficient feeding cycle is achieved.

In an embodiment of the cut surface sealing device according to the invention the seal can be provided on one or more sides with connecting elements for connecting the seal to the silo wall and/or to an additional sealing part.

An advantage of arranging connecting elements on the seal is that the seal can be connected directly and substantially sealingly to the walls of for instance a trench silo. This is especially interesting when a seal slidable in horizontal direction is applied, because these can remain connected substantially fixedly to the walls during opening and closing of the seal for removing bulk fodder from the storage. This prevents entry of water and/or animals (even) more effectively and maintains the quality of (particularly the cut of) the bulk fodder better.

A further advantage of connecting elements is that a plurality of sections of seal can be connected to each other, whereby a (considerable) widening of the frame can be compensated for by arranging additional sections of seal.

In an embodiment the connecting element can be one or more of a magnet, velcro tape, a hook and eye connection and/or a rail connection.

In an embodiment of the cut surface sealing device according to the invention the frame can further comprise a roller configured to hold a covering sheet for the trench silo, wherein the roller is arranged rotatably on the frame and wherein the roller extends substantially over a whole width of the trench silo, wherein the roller is operatively connected to a roller drive for the purpose of driving the roller in order to roll a covering sheet onto the roller and/or unroll it therefrom.

By providing the frame with a roller for holding a covering sheet which is arranged over the upper side (and preferably partially the sides) of the bulk fodder, as for instance also in a trench silo, sealing of the cut surface can be combined in efficient manner with sealing of the upper side and sides of the bulk fodder.

A further advantage is that rolling up of the covering sheet from the upper side of the bulk fodder, preferably in a trench silo, can be combined in one operation with displacing of the frame in order to arrange the seal in front of the cut surface.

Yet another advantage is that the combination of the cut surface seal and the roller for a covering sheet on the frame results in a cost saving because only one device is necessary for the purpose of covering both upper side and sides and the cut surface.

In an embodiment of the cut surface sealing device according to the invention the cut surface sealing device can also be arranged on or be integrated in an existing device with a covering sheet on a roller.

It is the case here that the device according to the invention is arranged on a side of the existing device directed toward the opening of the trench silo so that the (substantially vertically oriented) cut surface seal closes off the cut surface, while the upper side of the stored bulk fodder is covered by the covering sheet. The cut surface sealing device preferably protrudes slightly relative to the device with the covering sheet.

In the case of an integrated cut surface sealing device and covering sheet device, it is thus for instance possible to opt to arrange the cut surface sealing device on the frame of the covering sheet device by means of connecting elements such as a connecting beam. The two devices thereby use the same support elements and the same span, and it is simultaneously realized that the cut surface seal can be placed in front of the cut surface.

In a further embodiment it is the case that the connecting elements are adjustable connecting elements, such as for instance adjustable tubes or telescopic tubes or other types of telescopic element.

In a further embodiment the frame is formed by two A- or T-shaped support elements on which, on or close to an upper end thereof, a roller for a covering sheet is arranged, as is a guide for holding and guiding the seal, which preferably takes the form of a (reusable) sheet.

It is the case here that the frame can be placed both on the outer side of trench silo walls or bulk fodder storage, whereby the device can take an independently movable form, and on trench silo walls in order to move the device over the trench silo walls. In the case that it is placed on the trench silo walls, the device can further be provided with a drive for displacing the device and/or rolling the covering sheet onto the roller and unrolling it from the roller and/or opening and closing the seal.

In an embodiment of the cut surface sealing device according to the invention the device can further be provided with a drive for moving the device at least over the longitudinal direction of the trench silo.

In an embodiment of the cut surface sealing device according to the invention the seal can be provided with ballast in order to keep it substantially vertical during use.

In an embodiment of the cut surface sealing device according to the invention the ballast can be provided as a weight, preferably an elongate weight such as a tube, on the underside of the seal in order to keep the seal substantially vertical during use.

In an embodiment of the cut surface sealing device according to the invention the seal can be provided with ballast connectors, such as for instance eyes, hooks or the like, which are configured to connect ballast thereto, such as weights, sandbags or the like, in order to keep the seal substantially vertical during use.

In an embodiment of the cut surface sealing device according to the invention the seal can be a seal which can be rolled up, wherein the device can further comprise a drive for rolling up and unrolling the seal and wherein the frame can further be provided with a guide device for guiding the seal between the closed position and the open position.

An advantage of the guide device according to the invention is that the seal extends at an angle to the spanning element before extending (further) vertically downward. Contact of the seal with the upper side of the bulk fodder is hereby reduced or even avoided, whereby the degeneration of the bulk fodder is substantially prevented.

In an embodiment of the cut surface sealing device according to the invention the guide device can comprise a number of guide arms and a number of guide elements, wherein the proximal outer end of each guide arm is connected rotatably to an associated support element and is rotatable between a roll-down position, in which the guide arm extends substantially horizontally, and a roll-up position in which the guide arm extends substantially vertically, and wherein each guide element is connected to a distal outer end of an associated guide arm, wherein each guide element extends from the distal outer end substantially parallel to the spanning element, wherein the guide element preferably extends at least partially round the seal, such that in the roll-down position of the guide arms the seal extends from the guide element to the spanning element at an angle to a horizontal plane.

An advantage of the guide device with the guide arms and guide elements is that the cut surface sealing device can be placed further away from the cut surface in the direction of a rear side of the bulk fodder or the silo, without this affecting the position of the seal relative to the cut surface. In the roll-up position the seal is also removed on the upper side of the bulk fodder, i.e. at the cut surface and slightly therebehind, which (further) facilitates cutting off or removal of the bulk fodder at the cut surface.

An advantage of applying the guide device with the guide arms and guide elements is that the guide elements guide the seal during the movement between the open and closed position of the seal, whereby contact of the seal with the cut surface is substantially minimized so that the cut surface is not damaged or does not cave in.

A further advantage is that, because they are situated (partially) round the seal, the guide elements are automatically co-displaced by the underside of the seal, particularly if this underside is provided with ballast such as a pipe or tube, so that the guide arms are automatically pulled up from the roll-down position to the roll-up position.

In an embodiment the movement of the guide device between the roll-down position and the roll-up position is preferably initiated by moving the seal respectively between the closed position and the open position, and the movement of the guide device between the roll-down position and the roll-up position is preferably initiated by moving the seal respectively between the open position and the closed position.

The guide device according to the invention and/or the arranging of a roller for a covering sheet according to the invention can also be applied in combination with a cut surface sealing device with a fixed, non-adjustable width. This embodiment without the width adjustment likewise falls within the scope of the invention, and these embodiments can be combined with all embodiments stated in the claims.

The invention further relates to a method for arranging a cut surface seal for sealing a cut surface of a bulk fodder storage such as a trench silo, the method comprising of:
- providing a device according to the invention;
- adapting the width of the device to the width of the trench silo or the bulk fodder storage.

The method according to the invention has the same advantages and effects as the device according to the invention.

Further features, advantages and details of the invention are described on the basis of embodiments thereof, wherein reference is made to the accompanying figures:
Figure 1 shows a perspective view of a first example of an embodiment of the cut surface sealing device according to the invention, wherein the silo walls have been omitted;
Figure 2 shows a top view of the embodiment of figure 1 without the seal;
Figure 3 shows a side view of the embodiment of figure 1 without the seal:
Figure 4a shows a perspective view of a second example of an embodiment of the cut surface sealing device according to the invention with the seal in open state;
Figure 4b shows a perspective view of the embodiment of figure 4a with the seal in closed state;
Figure 5 shows a detail view of a side of the frame of the embodiment of figure 4b; and
Figure 6 shows a perspective view of a third example of an embodiment of the cut surface sealing device according to the invention with the seal in partially open state.

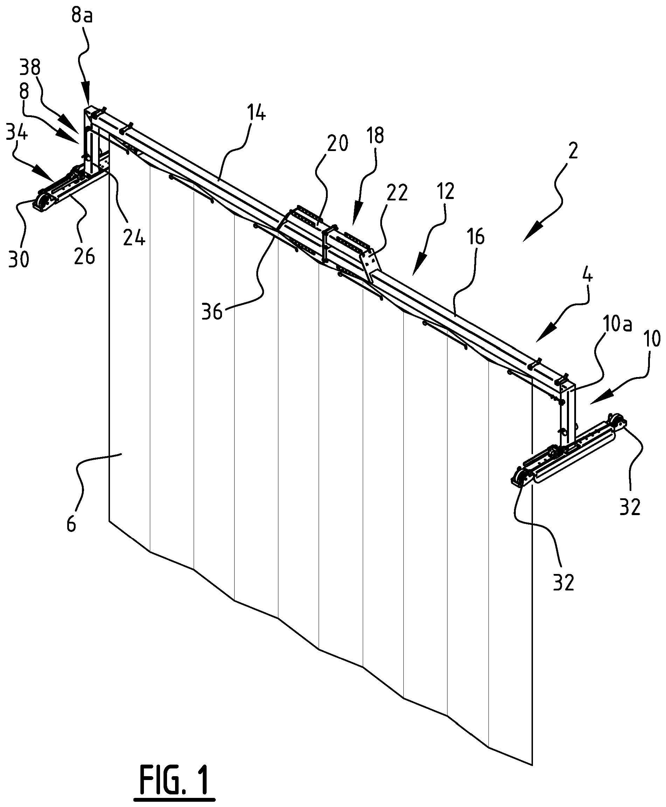

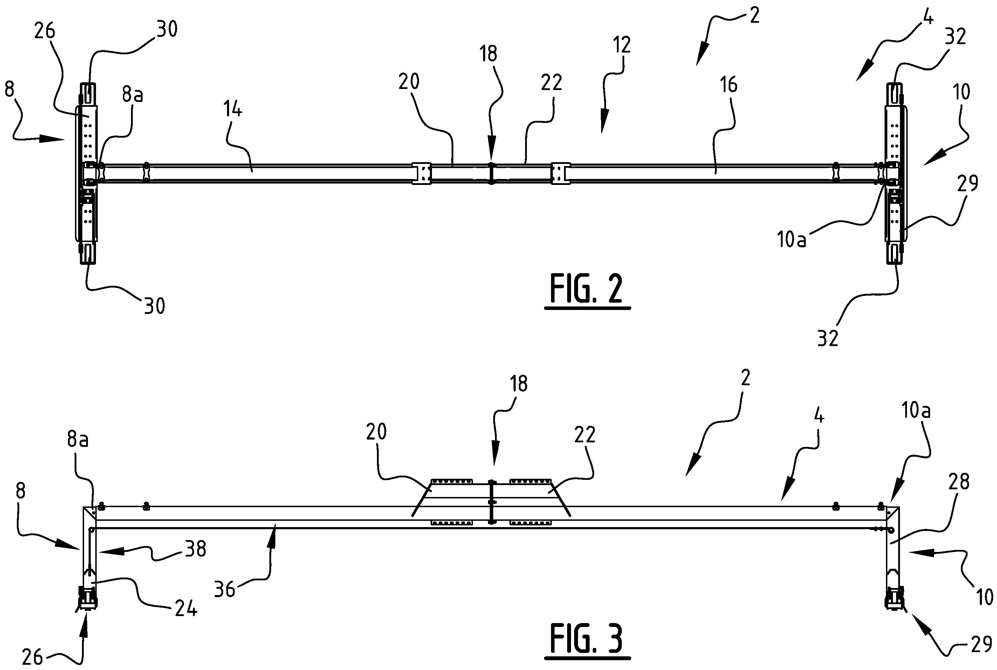

In a first example of cut surface sealing device 2 (see figures 1-3) device 2 comprises frame 4 and seal 6. Frame 4 consists of two support elements 8, 10 and a spanning element 12 which extends between respective outer ends 8a, 10a of support elements 8, 10. In this example spanning element 12 is a divisible spanning element 12 which can be divided into two spanning parts 14, 16, and spanning parts 14, 16 of which are connected releasably in the centre of spanning element 12. Frame 4 is provided, in this case at spanning element 12, with coupling device 18 which is likewise arranged in divisible manner. Coupling device 18 is configured for simple coupling of a lifting device of a vehicle, such as for instance a tractor (not shown). In this example spanning parts 14, 16 and coupling device parts 20, 22 are connected by means of bolt connections, although other connections are also possible.

Support element 8 comprises a vertical support element 24 and a horizontal support element 26 which is connected thereto and (in this example) is configured to support on a silo wall (not shown). In this example outer end 8a of support element 8 is a tubular profile having a cross-sectional area which is slightly smaller than a cross-sectional area of hollow tubular spanning element 12, so that outer end 8a is slidable in the inner side of spanning element 12. Outer end 8a therefore extends (largely or) partially in hollow tubular spanning element 12, so that it forms a telescopic connection whereby the width of device 2 can be adjusted.

It is similarly the case that support element 10 comprises a vertical support element 28 and a horizontal support element 29 which is connected thereto and is configured (in this example) to support on a silo wall (not shown). In this example outer end 10a of support element 10 is a tubular profile having a cross-sectional area which is slightly smaller than a cross-sectional area of hollow tubular spanning element 12, so that outer end 10a is slidable in the inner side of spanning element 12 on the side lying opposite outer end 8a of support element 8. Outer end 10a therefore extends (largely or) partially in hollow tubular spanning element 12, so that it forms a telescopic connection whereby the width of device 2 can be adjusted.

Each support element 8, 10 is provided with two wheels 30, 32 which are movable by means of lifting device 34 between a travelling position, in which wheels 30, 32 support on the silo walls, and a stationary position in which wheels 30, 32 do not support on the silo walls.

Guide 36, which in this example is formed as steel cable 36, extends between support elements 8, 10, parallel to spanning element 12. Steel cable 36 is connected to support elements 8, 10 close to outer ends 8a, 10a thereof, and is provided at support element 8 with tensioning device 38, which in this example is a screw tensioning device 38.

In this example seal 6 is a sheet 6 which is slidable in horizontal direction and is arranged on guide 36 in the form of steel cable 36.

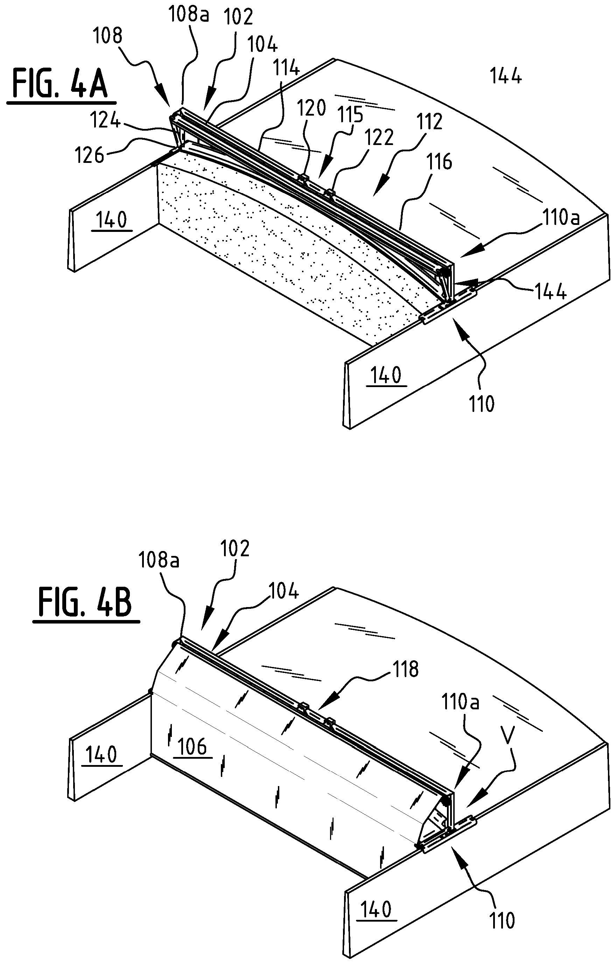

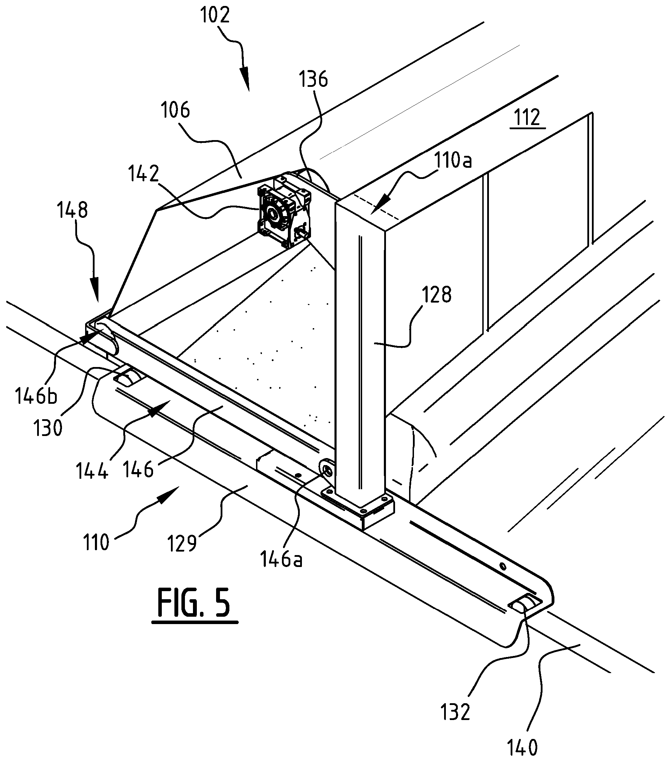

In a second example of cut surface sealing device 102 (see figures 4a, 4b, 5) device 102 comprises frame 104 and seal 106. Frame 104 consists of two support elements 108, 110 and a spanning element 112 which extends between respective outer ends 108a, 110a of support elements 108, 110. In this example spanning element 112 is a divisible spanning element 112 which can be divided into two spanning parts 114, 116 and wherein spanning parts 114, 116 are connected releasably in the centre of spanning element 112. Frame 104 is provided, in this case at spanning element 112, with coupling device 118 which is likewise arranged in divisible manner. Coupling device 118 is configured for simple coupling of a lifting device of a vehicle, such as for instance a tractor (not shown). In this example spanning parts 114, 116 and coupling device parts 120, 122 are connected by means of bolt connections, although other connections are also possible.

Support element 108 comprises a vertical support element 124 and a horizontal support element 126 which is connected thereto and (in this example) is configured to support on silo wall 140. In this example outer end 108a of support element 108 is a tubular profile having a cross-sectional area which is slightly smaller than a cross-sectional area of hollow tubular spanning element 112, so that outer end 108a is slidable in the inner side of spanning element 112. Outer end 108a therefore extends (largely or) partially in hollow tubular spanning element 112, so that it forms a telescopic connection whereby the width of device 102 can be adjusted.

It is similarly the case that support element 110 comprises a vertical support element 128 and a horizontal support element 129 which is connected thereto and is configured (in this example) to support on silo wall 140. In this example outer end 110a of support element 110 is a tubular profile having a cross-sectional area which is slightly smaller than a cross-sectional area of hollow tubular spanning element 112, so that outer end 110a is slidable in the inner side of spanning element 112 on the side lying opposite outer end 108a of support element 108. Outer end 110a therefore extends (largely or) partially in hollow tubular spanning element 112, so that it forms a telescopic connection whereby the width of device 102 can be adjusted.

Each support element 108, 110 is provided with two wheels 130, 132 which are movable by means of a lifting device (not shown) between a travelling position, in which wheels 130, 132 support on silo walls 140, and a stationary position in which wheels 130, 132 do not support on silo walls 140.

Guide 136, which in this example is formed as roller 136 onto which seal 106 can be rolled, extends between support elements 108, 110, parallel to spanning element 112. Roller 136 is connected to support elements 108, 110 close to outer ends 108a, 110a thereof, and is provided with drive 142 (see figure 5) for rolling up and unrolling seal 106. In this example cut surface sealing device 102 is further provided with guide device 144 which consists of guide arms 146, which has a proximal outer end 146a which is connected rotatably to support element 108, 110 and which is provided at distal outer end 146b with guide element 148, this being corner profile 148 in this example, which extends partially round seal 106. In this example seal 106 is a sheet 106 which can be rolled up in vertical direction and can be rolled onto guide 136 in the form of roller 136. During rolling up and unrolling of sheet 106 guide device 144 moves between a roll-up position (see figure 4a) and a roll-down position (see figures 4b, 5) for guiding the seal between the open and closed position.

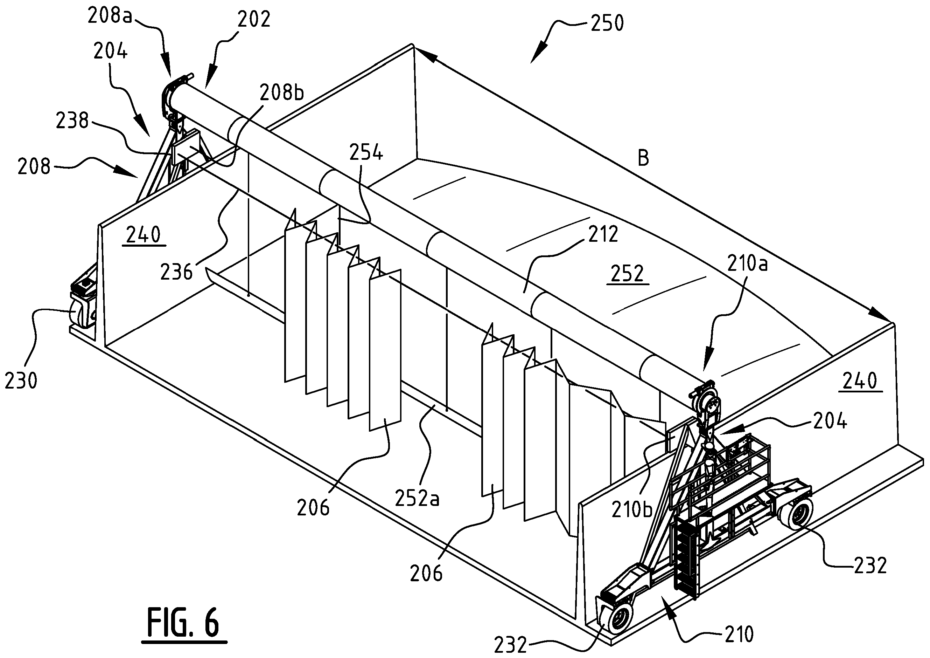

In a third example of cut surface sealing device 202 (see figure 6) device 202 comprises frame 204 and seal 206. Frame 204 consists of two A-shaped support elements 208, 210 and a spanning element 212 which extends between respective outer ends 208a, 210a of support elements 208, 210. In this example spanning element 212 is a roller 212 extending over the width B of silo 250 and protruding outside walls 240 of silo 250. Roller 212 is configured for connecting and rolling thereon and unrolling therefrom covering sheet 252, the outer end 252a of which is connected to roller 212 with tensioning straps 254. In this example roller 212 is configured to be adjustable in the width, although it is also possible to opt to maintain a fixed width.

In this example each support element 208, 210 is provided with two wheels 230, 232 driven by a drive. Guide 236, which in this example is formed as steel wire 236 on which seal 206 is slidable in horizontal direction, further extends between support elements 208, 210, parallel to roller 212. In this example steel wire 236 is connected to projections 208b, 210b on support elements 208, 210 close to outer ends 208a, 210a thereof, and is provided at support element 208 with tensioning device 238, which in this example is a screw tensioning device 238. Guide 236 is preferably formed from a plurality of steel wires 236 which are connected to a drive (not shown) for automatically opening and/or closing seal 206, for instance with a remote control (not shown).

The present invention is by no means limited to the above described embodiments thereof. The rights sought are defined by the following claims, within the scope of which many modifications can be envisaged.

## Claims

1. Cut surface sealing device (2, 102, 202) for sealing a cut surface of a bulk fodder storage such as a trench silo, the device (2, 102, 202) comprising:
- a frame (4, 104, 204) extending over a width, the frame (4, 104, 204) comprising:
~ a number of support elements (8, 10; 108, 110; 208, 210) extending substantially in vertical direction and configured to support the device on a ground surface or side walls of a trench silo, and
~ a spanning element (12, 112, 212) extending between the number of support elements (8,10; 108, 110; 208, 210), such that the support elements (8, 10; 108, 110; 208, 210) and the spanning element (12, 112, 212) form a cut surface opening;
- a seal (6, 106, 206) which is operatively connected to the frame (4, 104, 204) and is arranged in the cut surface opening, wherein the seal (6, 106, 206) is movable between a closed position, in which the seal (6, 106, 206) substantially closes the cut surface opening, and an open position in which the cut surface opening is at least partially accessible,
wherein the width of the frame (4, 104, 204) is adjustable, such that the width of the frame (4) can be adapted to the width of the bulk fodder storage; **characterized in that** the frame (4, 104, 204) is provided with a guide (36, 144, 236) for guiding the seal (6, 106, 206) between the open and closed position.

2. Cut surface sealing device according to claim 1, wherein the spanning element (12, 112, 212) is provided with a coupling (18, 118, 218) for coupling the device to a vehicle in order to be able to displace the device (2, 102, 202).

3. Cut surface sealing device according to claim 1, wherein the spanning element (12, 112, 212) is telescopic and/or wherein the number of support elements (8,10) is telescopically connected to the spanning element (12, 112, 212).

4. Cut surface sealing device according to any one of the foregoing claims, wherein the spanning element (12, 112, 212) comprises two or more parts (14, 16; 114, 116; 214, 216) which can be coupled and collectively form the spanning element (12, 112, 212) and/or wherein the spanning element (12, 112, 212) is a divisible element (12, 112, 212) comprising two parts (14, 16; 114, 116; 214, 216) of equal width which can be connected to each other.

5. Cut surface sealing device according to any one of the foregoing claims, wherein the number of support elements (8,10) is height-adjustable.

6. Cut surface sealing device according to any one of the foregoing claims, wherein the seal (6, 106, 206) is automatically movable between the closed and the open position.

7. Cut surface sealing device according to any one of the foregoing claims, wherein the number of support elements (8, 10, 108, 110, 208, 210) are provided on or close to an underside thereof with wheels (30, 32, 130, 132, 230, 232), wherein the wheels (30, 32, 130, 132, 230, 232) are preferably adjustable between a travelling position, in which the wheels (30, 32, 130, 132, 230, 232) support on the ground surface or the silo walls, and a stationary position in which the wheels (30, 32, 130, 132, 230, 232) do not support on the ground surface or the silo walls.

8. Cut surface sealing device according to any one of the foregoing claims, wherein the seal (6, 106, 206) is movable in vertical direction and substantially parallel to the height direction, or wherein the seal (6, 106, 206) is slidable in horizontal direction and substantially parallel to the width direction, and wherein the seal is preferably a tarpaulin or sheet, and more preferably a reusable tarpaulin or sheet.

9. Cut surface sealing device according to any one of the foregoing claims, wherein the seal (6, 106, 206) is arranged in the cut surface opening such that the seal (6, 106, 206) is arranged and is displaceable substantially in a vertical plane.

10. Cut surface sealing device according to any one of the foregoing claims, wherein the seal (6, 106, 206) is provided with a number of sensors, wherein the sensors are preferably configured to measure one or more of temperature, humidity, airflow detection and/or wind force and/or proximity of vehicles and/or persons, wherein the number of sensors preferably comprises at least one proximity sensor, and wherein the device is preferably further provided with:
- a drive for automatically opening and/or closing the seal;
- a control system, comprising a processor, which is configured to control the drive on the basis of measurement data of the at least one proximity sensor in order to open and/or close the seal on the basis of the proximity of persons and/or vehicles.

11. Cut surface sealing device according to any one of the foregoing claims, wherein the seal (6, 106, 206) is provided on one or more sides with connecting elements for connecting the seal to the silo wall and/or to an additional sealing part.

12. Cut surface sealing device according to any one of the foregoing claims, wherein the frame further comprises a roller configured to hold a covering sheet for the trench silo, wherein the roller is arranged rotatably on the frame and wherein the roller extends substantially over a whole width of the trench silo, wherein the roller is operatively connected to a roller drive for the purpose of driving the roller in order to roll a covering sheet onto the roller and/or unroll it therefrom.

13. Cut surface sealing device according to any one of the foregoing claims, wherein the device is further provided with a drive for moving the device at least over the longitudinal direction of the trench silo.

14. Cut surface sealing device according to any one of the foregoing claims, wherein the seal is a seal which can be rolled up, wherein the device further comprises a drive for rolling up and unrolling the seal and wherein the frame is further provided with a guide device for guiding the seal between the closed position and the open position, wherein the guide device preferably comprises:
- a number of guide arms, wherein the proximal outer end of each guide arm is connected rotatably to an associated support element and is rotatable between a roll-down position, in which the guide arm extends substantially horizontally, and a roll-up position in which the guide arm extends substantially vertically; and
- a number of guide elements, wherein each guide element is connected to a distal outer end of an associated guide arm, wherein each guide element extends from the distal outer end substantially parallel to the spanning element, wherein the guide element preferably extends at least partially round the seal, such that in the roll-down position of the guide arms the seal extends from the guide element to the spanning element at an angle to a horizontal plane.

15. Method for arranging a cut surface seal for sealing a cut surface of a bulk fodder storage such as a trench silo, the method comprising of:
- providing a device according to any one of the claims 1-14;
- adapting the width of the device to the width of the trench silo or the bulk fodder storage.

## Patentansprüche

1. Schnittoberflächenabdichtvorrichtung (2, 102, 202) zum Abdichten einer Schnittoberfläche eines Schüttfutterlagers wie eines Fahrsilos, die Vorrichtung (2, 102, 202) umfassend:
- einen Rahmen (4, 104, 204), der sich über eine Breite erstreckt, der Rahmen (4, 104, 204) umfassend:
- eine Anzahl von Stützelementen (8, 10; 108, 110; 208, 210), die sich im Wesentlichen in vertikaler Richtung erstrecken und konfiguriert sind, um die Vorrichtung auf einer Bodenoberfläche oder Seitenwänden eines Fahrsilos abzustützen, und
- ein Überbrückungselement (12, 112, 212), das sich zwischen der Anzahl von Stützelementen (8,10; 108, 110; 208, 210) erstreckt, sodass die Stützelemente (8, 10; 108, 110; 208, 210) und das Überbrückungselement (12, 112, 212) eine Schnittoberflächenöffnung ausbilden;
- eine Abdichtung (6, 106, 206), die mit dem Rahmen (4, 104, 204) wirkverbunden ist und in der Schnittoberflächenöffnung angeordnet ist, wobei die Abdichtung (6, 106, 206) zwischen einer geschlossenen Position, in der die Abdichtung (6, 106, 206) die Schnittoberflächenöffnung im Wesentlichen verschließt, und einer offenen Position, in der die Schnittoberflächenöffnung mindestens teilweise zugänglich ist, bewegbar ist,
wobei die Breite des Rahmens (4, 104, 204) derart verstellbar ist, dass die Breite des Rahmens (4) an die Breite des Schüttfutterlagers angepasst werden kann; **dadurch gekennzeichnet, dass** der Rahmen (4, 104, 204) mit einer Führung (36, 144, 236) zum Führen der Abdichtung (6, 106, 206) zwischen der offenen und der geschlossenen Position bereitgestellt ist.

2. Schnittoberflächenabdichtvorrichtung nach Anspruch 1, wobei das Überbrückungselement (12, 112, 212) mit einer Kopplung (18, 118, 218) zum Koppeln der Vorrichtung mit einem Fahrzeug bereitgestellt ist, um in der Lage zu sein, die Vorrichtung (2, 102, 202) zu verlagern.

3. Schnittoberflächenabdichtvorrichtung nach Anspruch 1, wobei das Überbrückungselement (12, 112, 212) teleskopisch ist und/oder wobei die Anzahl von Stützelementen (8,10) mit dem Überbrückungselement (12, 112, 212) teleskopisch verbunden ist.

4. Schnittoberflächenabdichtvorrichtung nach einem der vorstehenden Ansprüche, wobei das Überbrückungselement (12, 112, 212) zwei oder mehr Teile (14, 16; 114, 116; 214, 216) umfasst, die gekoppelt werden können und gemeinsam das Überbrückungselement (12, 112, 212) ausbilden und/oder wobei das Überbrückungselement (12, 112, 212) ein trennbares Element (12, 112, 212) ist, umfassend zwei Teile (14, 16; 114, 116; 214, 216) gleicher Breite, die miteinander verbunden werden können.

5. Schnittoberflächenabdichtvorrichtung nach einem der vorstehenden Ansprüche, wobei die Anzahl von Stützelementen (8,10) höhenverstellbar ist.

6. Schnittoberflächenabdichtvorrichtung nach einem der vorstehenden Ansprüche, wobei die Abdichtung (6, 106, 206) zwischen der geschlossenen und der offenen Position automatisch bewegbar ist.

7. Schnittoberflächenabdichtvorrichtung nach einem der vorstehenden Ansprüche, wobei die Anzahl von Stützelementen (8, 10, 108, 110, 208, 210) an oder nahe einer Unterseite davon mit Rädern (30, 32, 130, 132, 230, 232) bereitgestellt sind, wobei die Räder (30, 32, 130, 132, 230, 232) vorzugsweise zwischen einer Fahrposition, in der sich die Räder (30, 32, 130, 132, 230, 232) auf der Bodenoberfläche oder den Silowänden abstützen, und einer stationären Position, in der sich die Räder (30, 32, 130, 132, 230, 232) nicht auf der Bodenoberfläche oder den Silowänden abstützen, verstellbar sind.

8. Schnittoberflächenabdichtvorrichtung nach einem der vorstehenden Ansprüche, wobei die Abdichtung (6, 106, 206) in vertikaler Richtung und im Wesentlichen parallel zu der Höhenrichtung bewegbar ist, oder wobei die Abdichtung (6, 106, 206) in horizontaler Richtung und im Wesentlichen parallel zu der Breitenrichtung verschiebbar ist, und wobei die Abdichtung vorzugsweise eine Plane oder eine Folie und mehr bevorzugt eine wiederverwendbare Plane oder eine wiederverwendbare Folie ist.

9. Schnittoberflächenabdichtvorrichtung nach einem der vorstehenden Ansprüche, wobei die Abdichtung (6, 106, 206) in der Schnittoberflächenöffnung derart angeordnet ist, dass die Abdichtung (6, 106, 206) im Wesentlichen in einer vertikalen Ebene angeordnet ist und verlagerbar ist.

10. Schnittoberflächenabdichtvorrichtung nach einem der vorstehenden Ansprüche, wobei die Abdichtung (6, 106, 206) mit einer Anzahl von Sensoren bereitgestellt ist, wobei die Sensoren vorzugsweise konfiguriert sind, um eine oder mehrere von Temperatur, Feuchtigkeit, Luftstromdetektion und/oder Windkraft und/oder Nähe von Fahrzeugen und/oder Personen zu messen, wobei die Anzahl von Sensoren vorzugsweise mindestens einen Näherungssensor umfasst, und wobei die Vorrichtung vorzugsweise ferner bereitgestellt ist mit:
- einem Antrieb zum automatischen Öffnen und/oder Schließen der Abdichtung;
- einem Steuersystem, umfassend einen Prozessor, der konfiguriert ist, um den Antrieb auf der Basis von Messdaten des mindestens einen Näherungssensors zu steuern, um die Abdichtung auf der Basis der Nähe von Personen und/oder Fahrzeugen zu öffnen und/oder zu schließen.

11. Schnittoberflächenabdichtvorrichtung nach einem der vorstehenden Ansprüche, wobei die Abdichtung (6, 106, 206) auf einer oder mehreren Seiten mit Verbindungselementen zum Verbinden der Abdichtung mit der Silowand und/oder mit einem zusätzlichen Abdichtteil bereitgestellt ist.

12. Schnittoberflächenabdichtvorrichtung nach einem der vorstehenden Ansprüche, wobei der Rahmen ferner eine Rolle umfasst, die konfiguriert ist, um eine Abdeckfolie für das Fahrsilo zu halten, wobei die Rolle auf dem Rahmen drehbar angeordnet ist und wobei sich die Rolle im Wesentlichen über eine gesamte Breite des Fahrsilos erstreckt, wobei die Rolle mit einem Rollenantrieb zum Zwecke eines Antreibens der Rolle wirkverbunden ist, um eine Abdeckfolie auf die Rolle zu rollen und/oder diese davon abzurollen.

13. Schnittoberflächenabdichtvorrichtung nach einem der vorstehenden Ansprüche, wobei die Vorrichtung ferner mit einem Antrieb zum Bewegen der Vorrichtung mindestens über die Längsrichtung des Fahrsilos bereitgestellt ist.

14. Schnittoberflächenabdichtvorrichtung nach einem der vorstehenden Ansprüche, wobei die Abdichtung eine Abdichtung ist, die aufgerollt werden kann, wobei die Vorrichtung ferner einen Antrieb zum Aufrollen und Abrollen der Abdichtung umfasst und wobei der Rahmen ferner mit einer Führungsvorrichtung zum Führen der Abdichtung zwischen der geschlossenen Position und der offenen Position bereitgestellt ist, wobei die Führungsvorrichtung vorzugsweise umfasst:
- eine Anzahl von Führungsarmen, wobei das proximale äußere Ende jedes Führungsarms mit einem zugehörigen Stützelement drehbar verbunden ist und zwischen einer Herunterrollposition, in der sich der Führungsarm im Wesentlichen horizontal erstreckt, und einer Aufrollposition, in der sich der Führungsarm im Wesentlichen vertikal erstreckt, drehbar ist; und
- eine Anzahl von Führungselementen, wobei jedes Führungselement mit einem distalen äußeren Ende eines zugehörigen Führungsarms verbunden ist, wobei sich jedes Führungselement von dem distalen äußeren Ende im Wesentlichen parallel zu dem Überbrückungselement erstreckt, wobei sich das Führungselement vorzugsweise mindestens teilweise um die Abdichtung herum derart erstreckt, dass sich die Abdichtung in der Herunterrollposition der Führungsarme von dem Führungselement zu dem Überbrückungselement in einem Winkel zu einer horizontalen Ebene erstreckt.

15. Verfahren zum Anordnen einer Schnittoberflächenabdichtung zum Abdichten einer Schnittoberfläche eines Schüttfutterlagers wie eines Fahrsilos, das Verfahren umfassend:
- Bereitstellen einer Vorrichtung nach einem der Ansprüche 1 bis 14;
- Anpassen der Breite der Vorrichtung an die Breite des Fahrsilos oder des Schüttfutterlagers.

## Revendications

1. Dispositif d'étanchéité de surface coupée (2, 102, 202) permettant de sceller une surface coupée d'un espace de stockage de fourrage en vrac tel qu'un silo en tranchée, le dispositif (2, 102, 202) comprenant :
- un cadre (4, 104, 204) s'étendant sur une largeur, le cadre (4, 104, 204) comprenant :
- un nombre d'éléments de support (8, 10 ; 108, 110 ; 208, 210) s'étendant sensiblement dans la direction verticale et conçus pour supporter le dispositif sur une surface de sol ou des parois latérales d'un silo en tranchée, et
- un élément de portée (12, 112, 212) s'étendant entre le nombre d'éléments de support (8,10 ; 108, 110 ; 208, 210), de telle sorte que les éléments de support (8, 10 ; 108, 110 ; 208, 210) et l'élément de portée (12, 112, 212) forment une ouverture de surface coupée ;
- une fermeture d'étanchéité (6, 106, 206) qui est reliée de manière fonctionnelle au cadre (4, 104, 204) et est agencée dans l'ouverture de surface coupée, dans lequel la fermeture d'étanchéité (6, 106, 206) est mobile entre une position fermée, dans laquelle la fermeture d'étanchéité (6, 106, 206) ferme sensiblement l'ouverture de surface coupée, et une position ouverte dans laquelle l'ouverture de surface coupée est au moins partiellement accessible,
dans lequel la largeur du cadre (4, 104, 204) est réglable, de telle sorte que la largeur du cadre (4) peut être adaptée à la largeur de l'espace de stockage de fourrage en vrac ; **caractérisé en ce que** le cadre (4, 104, 204) est pourvu d'un guide (36, 144, 236) permettant de guider la fermeture d'étanchéité (6, 106, 206) entre la position ouverte et la position fermée.

2. Dispositif d'étanchéité de surface coupée selon la revendication 1, dans lequel l'élément de portée (12, 112, 212) est pourvu d'un accouplement (18, 118, 218) permettant d'accoupler le dispositif à un véhicule afin de pouvoir déplacer le dispositif (2, 102, 202).

3. Dispositif d'étanchéité de surface coupée selon la revendication 1, dans lequel l'élément de portée (12, 112, 212) est télescopique et/ou dans lequel le nombre d'éléments de support (8,10) est relié de manière télescopique à l'élément de portée (12, 112, 212).

4. Dispositif d'étanchéité de surface coupée selon l'une quelconque des revendications précédentes, dans lequel l'élément de portée (12, 112, 212) comprend deux parties ou plus (14, 16 ; 114, 116 ; 214, 216) qui peuvent être accouplées et former collectivement l'élément de portée (12, 112, 212) et/ou dans lequel l'élément de portée (12, 112, 212) est un élément divisible (12, 112, 212) comprenant deux parties (14, 16 ; 114, 116 ; 214, 216) de largeur égale qui peuvent être reliées l'une à l'autre.

5. Dispositif d'étanchéité de surface coupée selon l'une quelconque des revendications précédentes, dans lequel le nombre d'éléments de support (8,10) est réglable en hauteur.

6. Dispositif d'étanchéité de surface coupée selon l'une quelconque des revendications précédentes, dans lequel la fermeture d'étanchéité (6, 106, 206) est automatiquement mobile entre la position fermée et la position ouverte.

7. Dispositif d'étanchéité de surface coupée selon l'une quelconque des revendications précédentes, dans lequel le nombre d'éléments de support (8, 10, 108, 110, 208, 210) est pourvu de roues (30, 32, 130, 132, 230, 232) sur un, ou près d'un, côté inférieur de ceux-ci, dans lequel les roues (30, 32, 130, 132, 230, 232) sont de préférence réglables entre une position de déplacement, dans laquelle les roues (30, 32, 130, 132, 230, 232) s'appuient sur la surface de sol ou les parois de silo, et une position fixe dans laquelle les roues (30, 32, 130, 132, 230, 232) ne s'appuient pas sur la surface de sol ou les parois de silo.

8. Dispositif d'étanchéité de surface coupée selon l'une quelconque des revendications précédentes, dans lequel la fermeture d'étanchéité (6, 106, 206) est mobile dans la direction verticale et sensiblement parallèle à la direction de la hauteur, ou dans lequel la fermeture d'étanchéité (6, 106, 206) est coulissante dans la direction horizontale et sensiblement parallèle à la direction de la largeur, et dans lequel la fermeture d'étanchéité est de préférence une bâche ou une feuille, et plus préférablement une bâche ou une feuille réutilisable.

9. Dispositif d'étanchéité de surface coupée selon l'une quelconque des revendications précédentes, dans lequel la fermeture d'étanchéité (6, 106, 206) est agencée dans l'ouverture de surface coupée de telle sorte que la fermeture d'étanchéité (6, 106, 206) est agencée et peut être déplacée sensiblement dans un plan vertical.

10. Dispositif d'étanchéité de surface coupée selon l'une quelconque des revendications précédentes, dans lequel la fermeture d'étanchéité (6, 106, 206) est pourvue d'un nombre de capteurs, dans lequel les capteurs sont de préférence configurés pour mesurer une ou plusieurs parmi la température, l'humidité, la détection de flux d'air et/ou la force du vent et/ou la proximité de véhicules et/ou de personnes, dans lequel le nombre de capteurs comprend de préférence au moins un capteur de proximité, et le dispositif étant de préférence pourvu en outre :
- d'un entraînement permettant d'ouvrir et/ou de fermer automatiquement la fermeture d'étanchéité ;
- d'un système de commande, comprenant un processeur, lequel est configuré pour commander l'entraînement sur la base de données de mesure de l'au moins un capteur de proximité afin d'ouvrir et/ou de fermer la fermeture d'étanchéité sur la base de la proximité de personnes et/ou de véhicules.

11. Dispositif d'étanchéité de surface coupée selon l'une quelconque des revendications précédentes, dans lequel la fermeture d'étanchéité (6, 106, 206) est pourvue sur un ou plusieurs côtés d'éléments de liaison permettant de relier la fermeture d'étanchéité à la paroi de silo et/ou à une partie d'étanchéité supplémentaire.

12. Dispositif d'étanchéité de surface coupée selon l'une quelconque des revendications précédentes, dans lequel le cadre comprend en outre un rouleau conçu pour maintenir une feuille de recouvrement pour le silo en tranchée, dans lequel le rouleau est agencé de manière rotative sur le cadre et dans lequel le rouleau s'étend sensiblement sur toute une largeur du silo en tranchée, dans lequel le rouleau est relié de manière fonctionnelle à un entraînement de rouleau dans le but d'entraîner le rouleau afin d'enrouler une feuille de recouvrement sur le rouleau et/ou de la dérouler de celui-ci.

13. Dispositif d'étanchéité de surface coupée selon l'une quelconque des revendications précédentes, le dispositif étant en outre pourvu d'un entraînement permettant de déplacer le dispositif au moins sur la direction longitudinale du silo en tranchée.

14. Dispositif d'étanchéité de surface coupée selon l'une quelconque des revendications précédentes, la fermeture d'étanchéité étant une fermeture d'étanchéité qui peut être enroulée, le dispositif comprenant en outre un entraînement permettant d'enrouler et de dérouler la fermeture d'étanchéité et le cadre étant en outre pourvu d'un dispositif de guidage permettant de guider la fermeture d'étanchéité entre la position fermée et la position ouverte, le dispositif de guidage comprenant de préférence :
- un nombre de bras de guidage, l'extrémité extérieure proximale de chaque bras de guidage étant reliée de manière rotative à un élément de support associé et pouvant tourner entre une position de déroulement, dans laquelle le bras de guidage s'étend sensiblement horizontalement, et une position d'enroulement dans laquelle le bras de guidage s'étend sensiblement verticalement ; et
- un nombre d'éléments de guidage, chaque élément de guidage étant relié à une extrémité extérieure distale d'un bras de guidage associé, chaque élément de guidage s'étendant à partir de l'extrémité extérieure distale sensiblement parallèlement à l'élément de portée, l'élément de guidage s'étendant de préférence au moins partiellement autour de la fermeture d'étanchéité, de telle sorte que dans la position de déroulement des bras de guidage la fermeture d'étanchéité s'étend à partir de l'élément de guidage jusqu'à l'élément de portée selon un angle par rapport à un plan horizontal.

15. Procédé permettant d'agencer une fermeture d'étanchéité de surface coupée permettant de sceller une surface coupée d'un espace de stockage de fourrage en vrac tel qu'un silo en tranchée, le procédé comprenant :
- la fourniture d'un dispositif selon l'une quelconque des revendications 1 à 14 ;
- l'adaptation de la largeur du dispositif à la largeur du silo en tranchée ou de l'espace de stockage de fourrage en vrac.
